# EUROPEAN PATENT SPECIFICATION

(11) **EP 2 752 773 B1**
(45) Date of publication and mention of the grant of the patent: **26.07.2017**
(21) Application number: 13749052.0
(22) Date of filing: 08.02.2013
(51) Int. Cl.: H04W 24/02, H04L 12/24, H04W 84/04

(54) **FEMTO BASE STATION APPARATUS AND OPERATION SYSTEM**
FEMTO-BASISSTATIONSVORRICHTUNG UND BETRIEBSSYSTEM DAFÜR
APPAREIL DE FEMTO-STATION DE BASE ET SYSTÈME DE FONCTIONNEMENT

(30) Priority: 14.02.2012 JP 2012029961
(43) Date of publication of application: 09.07.2014
(73) Proprietor: NTT Docomo, Inc., Tokyo 100-6150 (JP)
(72) Inventor: TOOYAMA, Hiroto, Tokyo 100-6150 (JP); FUJII, Kentaro, Tokyo 100-6150 (JP); KISHIKAWA, Yuuki, Tokyo 100-6150 (JP); NAMIE, Satoshi, Tokyo 100-6150 (JP); TAKAHASHI, Kazuhide, Tokyo 100-6150 (JP)
(74) Representative: Henseler, Daniela
(86) International application number: PCT/JP2013/000703
(87) International publication number: WO 2013/121761

(56) References cited:
- EP-A1- 2 180 640
- EP-A1- 2 309 789
- WO-A2-2011/002250
- JP-A- 2005 157 885
- JP-A- 2007 011 645
- US-A1- 2002 157 090

## Description

### Technical Field

The present invention relates to a base station apparatus in accordance with claim 1. Such a base station apparatus is a wireless communication apparatus installed for the purpose of such as complementing an area. The invention also relates to a system including a base station and an operation system for instructing operation control according to claim 5.

### Background Art

In a mobile communication system, an operation system for monitoring, controlling or the like of an apparatus constituting a mobile communication network may be installed (for example, see Non-Patent Document 1). Installing the operation system makes it possible to monitor and control a wireless base station apparatus in a remote location and the like.

On the other hand, as a wireless communication apparatus, a femto base station apparatus (it may be also referred to as femto cell base station apparatus) is known as a base station installed for the purpose of complementing a service area of a mobile communication. A technique for updating the setting of the femto base station apparatus is described in Patent Document 1. In Patent Document 1, the femto base station apparatus receives settings and updates the settings of the femto base station on the basis of the settings.

In addition, Non-Patent Document 2 is known as a technique related to firmware updating. Non-Patent Document 2 describes that the firmware updating is performed at a predetermined time automatically when the latest firmware is provided, if the type of the firmware updating is set to "automatic update".

### Prior Art Documents

### Patent Document

Patent Document 1: JP 2011-120095 A

### Non-Patent Documents

Non-Patent Document 1: "Special Article on Operation System: Operation System Development Trends in DoCoMo - Towards Efficient Operation of Networks and Improvement of Service Quality-", NTT DoCoMo Technical Journal, (searched on January, 4, 2012), the Internet (URL: http://www.nttdocomo.co.jp/binary/pdf/corporate/technolog y/rd/technical_journal/bn/vol8_1/vol8_1_006jp.pdf)
Non-Patent Document 2: "PR-220ne Router Setting Manual, Firmware Update" (searched on January, 4, 2012), the Internet (URL: http://router.ipq.jp/pr-200ne/post 363.html)

US 2002 0157090 A1 discloses portions of a management software that may require upgrading and that are stored in a RAM. The portions include the currently loaded version of an access point management software. A program is provided that requests and receives a version code from the server indicating the current version of the access point.

From EP 2 180 640 A1 a system of a self-organizing network is known that comprises a Home NodeB and a Home NodeB configuration server that interacts with the Home NodeB and provides configuration data information and version information for the Home NodeB.

### Summary of the Invention

### Problem to be Solved

It is difficult for a carrier, i.e. telecommunications operator to have access to the femto base station apparatus, since the femto base station apparatus is often installed in a user's house. Furthermore, it is difficult for the telecommunications operator to control power on/off or its installation and the like of the femto base station apparatus, since the user may power on and off the apparatus. Therefore, the power off uncontrollable for the carrier (i.e. telecommunications operator) may happen, such as when the user performs power off operation of the femto base station apparatus or the like. In this case, file updating cannot be performed at a desired timing, and then the operation using an older revision number (an older version) of the file may continue.

It can be taken into account to confirm a revision number of the file (version information) periodically. However, even in this way, the control may not be able to be performed normally when operation control or the like is tried between periodical timings. Furthermore, it can be taken into account to shorten a period length in order to avoid such an event, however, this narrows a bandwidth of the network in a practical operation since several tens of thousands of femto base stations may be installed, and then a realistic operation becomes difficult.

As stated above, if an operator performs the file updating manually on an apparatus needing updating in order to solve the above problem, this involves a lot of efforts since it is necessary to perform the operation control for several tens of thousands of femto base station apparatus. Even if a system automatically performing the operation control remotely is constructed, the operator has to provide instructions (a program or a scenario) manually in consideration of update timings or available situations of the network or the like.

The present invention has been made in view of the above circumstances and intends to provide a base station apparatus and a system that is capable of updating only an apparatus needing updating only when needed, to prevent the bandwidth of the network from being narrowed.

### Solution to the Problem

In order to solve the above problems, a base station apparatus according to an aspect of the present invention includes the features of claim 1. Such a configuration makes it possible to update only an apparatus needing updating only when needed, by confirming a file version automatically before the operation. Then, it is possible to prevent the bandwidth of the network from being narrowed.

The base station apparatus may further include a file obtaining unit configured as disclosed by claim 2. Such a configuration makes it possible to update only an apparatus needing updating only when needed, by confirming the file version automatically before the operation and by performing the file updating in the case of where the file versions are different. Then, it is possible to prevent the bandwidth of the network from being narrowed.

The configuration according to the invention makes it possible to update only an apparatus needing updating only when needed, by performing the file updating in the case where the major versions out of the file versions are different, and by not performing the file updating in the case where the minor versions are different. Then, it is possible to further prevent the bandwidth of the network from being narrowed.

According to another aspect of the present invention, there is provided an operation system configured to perform operation control for a femto base station apparatus, as disclosed by claim 5. Such a configuration makes it possible to update only an apparatus needing updating only when needed, by confirming a file version automatically before the operation. Then, it is possible to prevent the bandwidth of the network from being narrowed.

The operation system may include a file transmitting unit configured to transmit a version of file necessary for the operation control to the femto base station apparatus, when the version information of the file necessary for the operation control does not match the version information stored in the femto base station apparatus. Such a configuration makes it possible to update only an apparatus needing updating only when needed, by confirming the file version automatically before the operation and by performing the file updating in the case where the file versions are different. Then, it is possible to prevent the bandwidth of the network from being narrowed.

There is disclosed an operation control method including: a first step for transmitting version information of the file necessary for operation control for a femto base station apparatus to the femto base station before performing the operation control; and a second step for transmitting a version of file necessary for the operation control to the femto base station apparatus, when the version information of the file necessary for the operation control does not match the version information stored in the femto base station apparatus. Such a configuration makes it possible to update only an apparatus needing updating only when needed, by confirming the file version automatically before the operation. Then, it is possible to prevent the bandwidth of the network from being narrowed.

### Advantageous Effects of the Invention

According to the present invention, it is possible to update only an apparatus needing updating only when needed, by confirming a file version automatically before the operation and by performing the file updating in the case where the file versions are different. Then, it is possible to prevent the bandwidth of the network from being narrowed. Furthermore, by performing the file updating before the operation in the case where file versions are different, the file is surely updated to the latest version at the timing of performing the operation and the femto base station apparatus can be controlled with the latest version of file.

### Brief Description of the Drawings

FIG. 1 is a diagram illustrating a configuration example of a network including a femto base station apparatus according to an embodiment of the present invention;
FIG. 2 is a diagram illustrating a configuration example of the femto base station apparatus in FIG. 1;
FIG. 3 is a diagram illustrating a configuration example of the operation system in FIG. 1;
FIG. 4 is a diagram illustrating the first operation example of the femto base station apparatus and the operation system;
FIG. 5 is a diagram illustrating the second operation example of the femto base station apparatus and the operation system; and
FIG. 6 is a diagram illustrating the third operation example of the femto base station apparatus and the operation system.

### Description of Embodiments

Hereinafter, embodiments of the present invention will be described in detail with reference to the drawings. In each of the drawings referred to with the following description, elements same as those in other drawings will be indicated by the same reference signs.

### (Configuration Example of Entire Network Including Femto Base Station Apparatus)

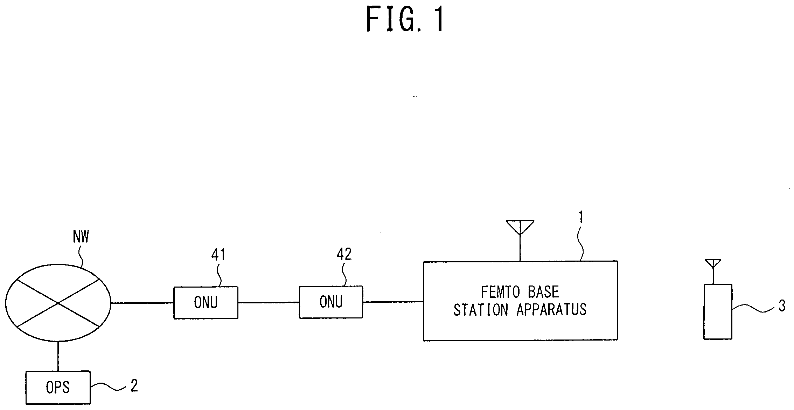

FIG. 1 is a diagram illustrating a configuration example of a network including a femto base station apparatus according to an embodiment of the present invention. In FIG. 1, the network including the femto base station apparatus according to the present embodiment includes a mobile telephone network NW, an operation system (hereinafter, referred to as OPS) 2 connected to the mobile telephone network NW, and a femto base station apparatus 1. The mobile telephone network NW and the femto base station apparatus 1 are connected to each other with an optical line via ONUs (Optical Network Unit) 41 and 42 in this example. It should be noted that the present invention may be applied in the case where the mobile telephone network NW and the femto base station apparatus 1 are not connected to each other with the optical line.

The femto base station apparatus 1 has an antenna forming a femto cell. A mobile communication terminal apparatus 3 can receive a service of the mobile telephone network NW, when the mobile communication terminal apparatus 3 is located in a femto cell provided by the femto base station apparatus 1. That is, the mobile communication terminal apparatus 3 can communicate with another apparatus (not shown) via the mobile telephone network NW, when the mobile communication terminal apparatus 3 is located in a service area of the femto cell formed by the femto base station apparatus 1.

### (Functional Configuration Example of Femto Base Station Apparatus)

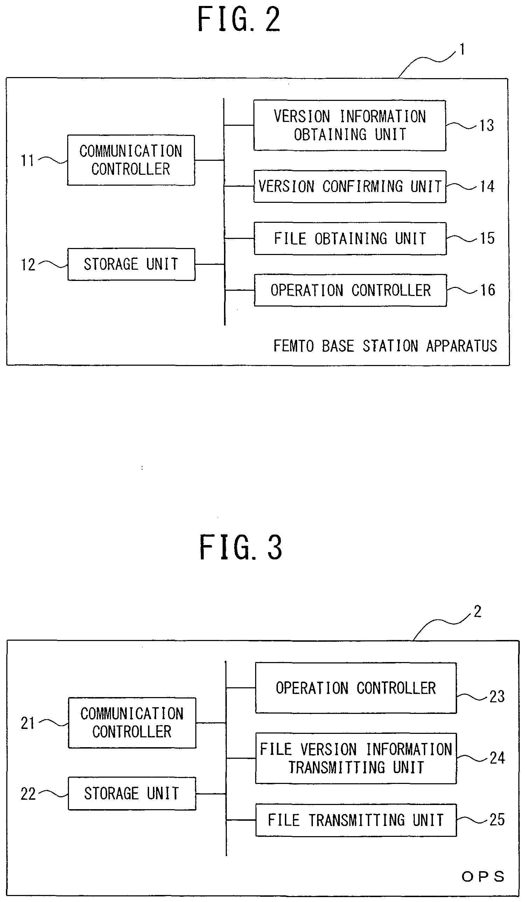

FIG. 2 is a diagram illustrating a configuration example of the femto base station apparatus 1 in FIG. 1.

In FIG. 2, the femto base station apparatus 1 of the present example includes a communication controller 11 for controlling communication between the femto base station apparatus 1 and another apparatus, a storage unit 12 for storing various items of information, a version information obtaining unit 13 for obtaining the version information of a file necessary for operation control before performing the operation control, a version confirming unit 14 for confirming whether or not the version information obtained by the version information obtaining unit 13 matches the version information of the file stored in the storage unit 12, and an operation controller 16 for performing the operation control when the version confirming unit 14 confirms matching of the version information.

Here, the term "operation control" means performing reset control or application updating of the femto base station apparatus by a carrier, i.e. telecommunications operator in providing a service using the femto base station apparatus. The term "reset control" means switching a power supply into OFF state once, and into ON state again in order for recovery in the case where the femto base station apparatus falls into an abnormal state or for reflecting the updated file. The term "file updating" means updating software in order for function addition of the femto base station apparatus.

In FIG. 2, the femto base station apparatus 1 of the present example further includes a file obtaining unit 15 for obtaining a version of the file necessary for the operation control when the version confirming unit 14 confirms mismatching of the version information.

The file necessary for the operation control is stored in the storage unit 12 along with the version information indicating a version of the file.

It should be noted that the function of each of the parts described above is implemented, for example, by a program being performed by a CPU.

### (Function Configuration Example of OPS)

FIG. 3 is a diagram illustrating a configuration example of the OPS 2 in FIG. 1.

In FIG. 3, the OPS 2 includes a communication controller 21 for controlling communication between the OPS 2 and another apparatus, a storage unit 22 for storing various items of information, a operation controller 23 for transmitting an operation control instruction to the femto base station apparatus 1, and a file version information transmitting unit 24 for transmitting the version information of the file necessary for the operation control to the femto base station apparatus 1.

Furthermore, in FIG. 3, the OPS 2 of the present example further includes a file transmitting unit 25 for transmitting version of file necessary for the operation control to the femto base station apparatus 1, when the version information of the file necessary for the operation control does not match the version information stored in the femto base station apparatus 1.

The version information of the file necessary for the operation control is stored in the storage unit 22.

It should be noted that the function of each of the parts described above is implemented, for example, by a program being performed by a CPU.

### (Version of File)

The version information of the file necessary for the operation control may have a major version and a minor version, as its version information. Settings to modify the file automatically only when the major version is upgraded can be provided (see the third operation example described below). This makes it possible to perform controlling such that the file updating is performed only when the file of control contents performed by the operation system is changed, or only when a fatal security problem occurs. In addition, an operation that upgrades the minor version only when a maintenance person intervenes in updating, or the like is conceivable.

This makes it possible to perform the updating only when really needed even if an upgraded revision number of the file is grows frequently, therefore, the file updating frequency and a network load can be reduced.

Here, the term "major version" means a version upgraded when an improvement of the operation control, an improvement of critical security or the like is implemented. The operation may not be able to perform the control if the major version is old.

Furthermore, the term "minor version" is a version upgraded in the case of a simple version upgrade not including an improvement of the operation control, an improvement of critical security or the like.

### (The First Operation Example)

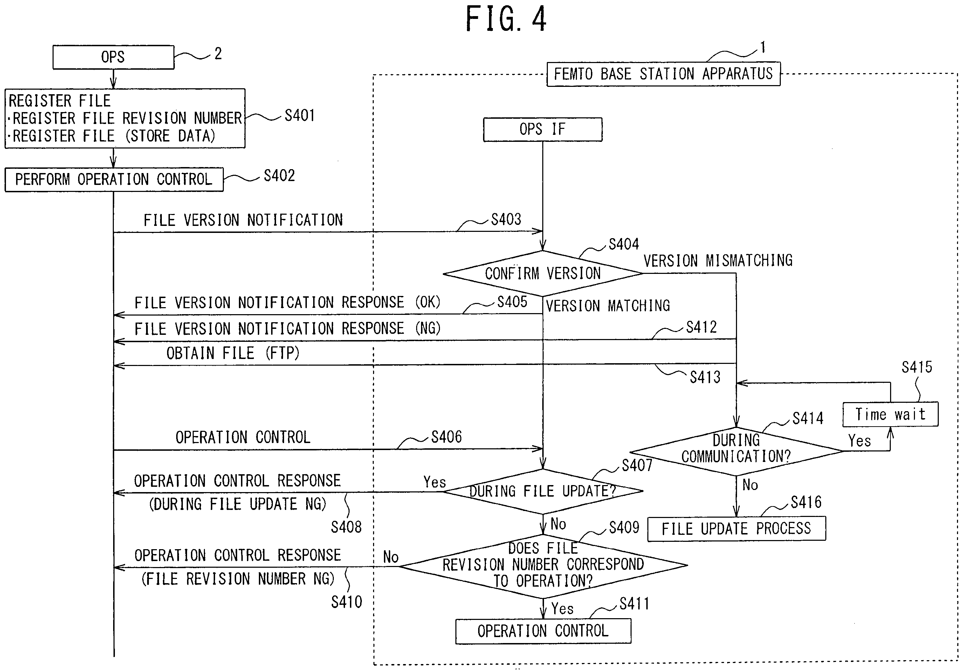

The first operation example of the femto base station apparatus 1 and the OPS 2 will be described with reference to FIG. 4. FIG. 4 is a diagram illustrating signal communication between the femto base station apparatus 1 and the OPS 2, the operation of the femto base station apparatus 1, and the operation example of the OPS 2. Regarding the operation of the femto base station apparatus 1, the operation of an interface part with the OPS 2 (OPS IF part) is explained mainly.

At first, a file registration processing is performed in the OPS 2 (step S401). The file registration processing includes a registration processing of a file revision number (i.e. file version information), and a registration processing of the file (data) necessary for the operation control. In the file registration processing, the file version information and the file necessary for the operation control are stored in the storage unit 22.

Then, in order to perform the operation control (step S402), the file version information transmitting unit 24 in the OPS 2 transmits a notice of the file version information to the femto base station apparatus 1 (step S403). In the femto base station apparatus 1, when the communication controller 11 receives the notice of the file version information, the version information obtaining unit 13 obtains the version information of the file necessary for operation control from the storage unit 12. The version confirming unit 14 confirms whether or not the obtained version information matches the notified file version information (step S404).

As a result of confirmation by the version confirming unit 14, when the notified version information matches the version information of the file stored in the storage unit 12, the communication controller 11 in the femto base station apparatus 1 transmits a file version notification response as "OK" to the OPS 2 (from step S404 to step S405), in order to notify the OPS 2 of the matching. In the OPS 2, when the communication controller 21 receives the file version notification response, the operation controller 23 transmits the operation control instruction (step S406).

In the femto base station apparatus 1, when the communication controller 11 receives the operation control instruction, only when the operation controller 16 determines that the file is not currently being updated, and the file version corresponds to the operation control (from step S407 to S409), the operation control is performed (step S411).

When the operation controller 16 determines that the file is currently being updated, the communication controller 11 transmits an operation control response as "DURING FILE UPDATE NG" to the OPS 2 (from step S407 to step S408). Furthermore, when the operation controller 16 determines that the file version does not correspond to the operation control, the communication controller 11 transmits the operation control response as "FILE REVISION NUMBER NG" to the OPS 2 (from step S409 to step S410).

As a result of confirmation by the version confirming unit 14 in step S404, when the notified version information does not match the version information of the file stored in the storage unit 12 (in the case of mismatching), the communication controller 11 in the femto base station apparatus 1 transmits a file version notification response as "NG" to the OPS 2 (from step S404 to S412), in order to notify the OPS 2 of the mismatching. Then, the file obtaining unit 15 transmits a request for obtaining a version of the file necessary for the operation control (step S413). For example, this request is performed in accordance with the well-known FTP (File Transfer Protocol). Then, when communication is currently being performed, the file updating process waits for elapse of a predetermined time (Time Wait) (from step S414 to step S415). Then, when communication is not currently being performed, the file updating process is performed (from step S414 to step S416).

The updated file is stored in the storage unit 12 along with the version information indicating the version of the file.

According to the first operation example described above, it is possible to update only an apparatus needing updating only when needed, by automatically confirming the file version before the operation and by performing the file updating in the case where the file versions are different. Then, it is possible to prevent the bandwidth of the network from being narrowed.

### (The Second Operation Example)

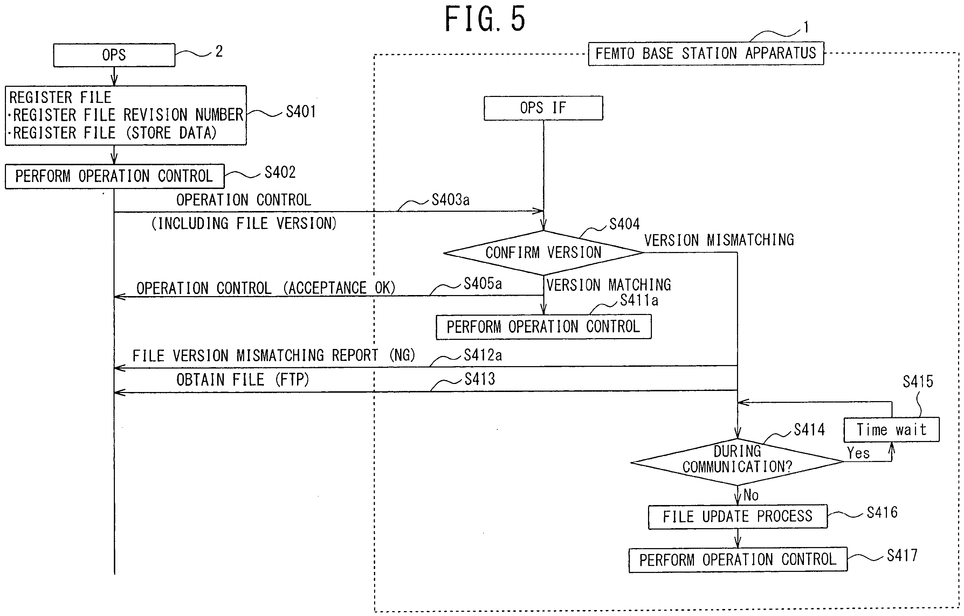

The second operation example of the femto base station apparatus 1 and the OPS 2 will be described with reference to FIG. 5. FIG. 5 is a diagram illustrating the signal communication between the femto base station apparatus 1 and the OPS 2, the operation of the femto base station apparatus 1, and the operation example of the OPS 2. Regarding the operation of the femto base station apparatus 1, the operation of the interface part with the OPS 2 (OPS IF part) is explained mainly.

In the second operation example, the operation control instruction including the file version information is transmitted from the OPS 2 to the femto base station apparatus 1. The file version information may be included in either of a header or a payload as long as the femto base station apparatus 1 can recognize the file version information.

At first, the file registration processing is performed in the OPS 2 (step S401). The file registration processing includes the registration processing of the file revision number (i.e. file version information), and the registration processing of the file (data) necessary for the operation control. In the file registration processing, the file version information and the file necessary for the operation control are stored in the storage unit 22. These steps are similar to the ones in the case of the first operation example.

Then, the operation controller 23 in the OPS 2 transmits the operation control instruction including the file version information to the femto base station apparatus 1 (step S403a), in order to perform the operation control (step S402). In the femto base station apparatus 1, when the communication controller 11 receives the operation control instruction including the file version information, the version information obtaining unit 13 obtains the version information of the file necessary for operation control from the storage unit 12. The version confirming unit 14 confirms whether or not the obtained version information matches the notified file version information (step S404).

As a result of confirmation by the version confirming unit 14, when the notified version information matches the version information of the file stored in the storage unit 12, the communication controller 11 in the femto base station apparatus 1 transmits the operation control response as "ACCEPTANCE OK" to the OPS 2 (from step S404 to S405a), in order to notify the OPS 2 of the matching. Then, the operation controller 16 performs the operation control (step S411a).

As a result of confirmation by the version confirming unit 14 in step S404, when the notified version information does not match the version information of the file stored in the storage unit 12 (in the case of mismatching), the communication controller 11 in the femto base station apparatus 1 transmits a file version notification response as "NG" to the OPS 2 (from step S404 to S412a), in order to notify the OPS 2 of the mismatching. Then, the file obtaining unit 15 transmits the request for obtaining a version of the file necessary for the operation control (step S413). For example, this request is performed in accordance with the well-known FTP (File Transfer Protocol). Then, when communication is currently being performed, the file updating process waits for elapse of a predetermined time (Time Wait) (from step S414 to step S415). Then, when communication is not currently being performed, the file updating process is performed (from step S414 to step S416). Then, the operation controller 16 performs the operation control (step S417).

The second operation example above described needs fewer times of signal communication between the OPS 2 and the femto base station apparatus 1, since the operation control instruction including the file version information is transmitted. Then, it is possible to further prevent the bandwidth of the network from being narrowed.

### (The Third Operation Example)

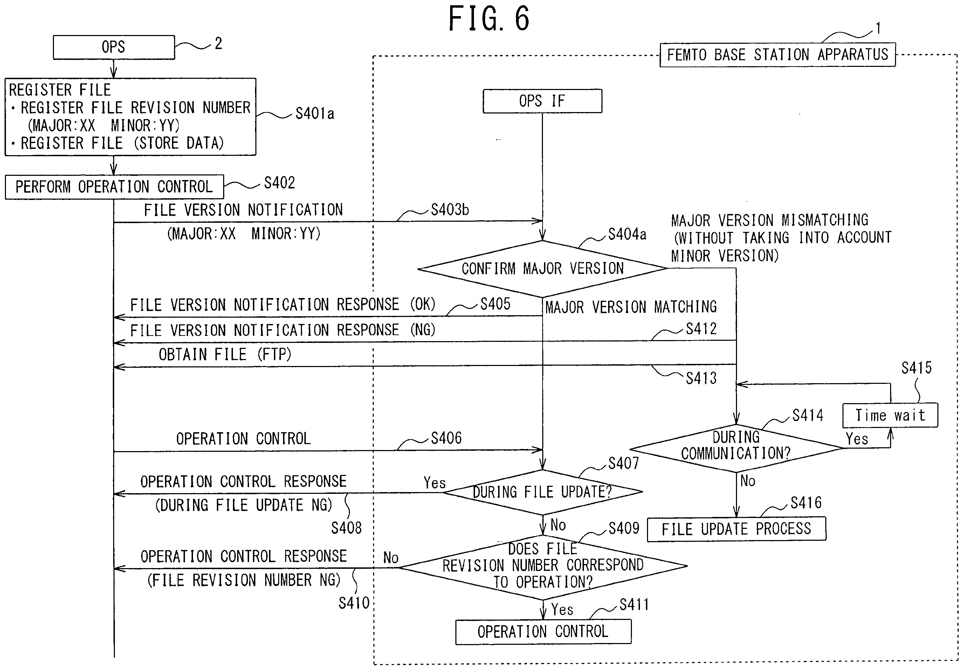

The third operation example of the femto base station apparatus 1 and the OPS 2 will be described with reference to FIG. 6. FIG. 6 is a diagram illustrating the signal communication between the femto base station apparatus 1 and the OPS 2, and also illustrating the operation of the femto base station apparatus 1 and the operation example of the OPS 2. Regarding the operation of the femto base station apparatus 1, the operation of the interface part with the OPS 2 (OPS IF part) is explained mainly.

In the third operation example, the version information of the file has a major version and a minor version, and the file is automatically modified only when the major version is upgraded.

At first, a file registration processing is performed in the OPS 2 (step S401a). The file registration processing includes the registration processing of the file revision number (i.e. file version information), and the registration processing of the file (data) necessary for the operation control. The file version information has major version information ("XX" in the present example) and minor version information ("YY" in the present example).

In the file registration processing, the file version information and the file necessary for the operation control are stored in the storage unit 22. In the registration process of a file revision number, the major version information and the minor version information are stored in the storage unit 22.

Then, in order to perform the operation control (step S402), the file version information transmitting unit 24 in the OPS 2 transmits the notice of the file version information to the femto base station apparatus 1 (step S403b). The file version information includes the major version information and the minor version information.

In the femto base station apparatus 1, when the communication controller 11 receives the notice of the file version information, the version information obtaining unit 13 obtains the version information of the file necessary for operation control from the storage unit 12. The version confirming unit 14 confirms whether or not the obtained version information matches the notified file version information (step S404a). In the confirmation, it is confirmed whether or not both of the major version information match each other, without taking into account the minor version information. That is, both items of the version information are deemed to match each other when both items of the major version information match each other, even if both items of minor version information do not match each other.

As a result of the confirmation by the version confirming unit 14, when the notified version information matches the version information of the file stored in the storage unit 12, the communication controller 11 in the femto base station apparatus 1 transmits a file version notification response as "OK" to the OPS 2 (from step S404a to step S405), in order to notify the OPS 2 of the matching. In the OPS 2, when the communication controller 21 receives the file version notification response, the operation controller 23 transmits the operation control instruction (step S406).

In the femto base station apparatus 1, when the communication controller 11 receives the operation control instruction, the operation control is performed (step S411) only when the operation controller 16 determines that the file is not currently being updated, and the file version corresponds to the operation control (from step S407 to step S409).

When the operation controller 16 determines that the file is currently being updated, the communication controller 11 transmits an operation control response as "DURING FILE UPDATE NG" to the OPS 2 (from step S407 to step S408). Furthermore, when the operation controller 16 determines that the file version does not correspond to the operation control, the communication controller 11 transmits the operation control response as "FILE REVISION NUMBER NG" to the OPS 2 (from step S409 to step S410).

As a result of confirmation by the version confirming unit 14 in step S404, when the notified version information does not match the version information of the file stored in the storage unit 12 (in the case of mismatching), the communication controller 11 in the femto base station apparatus 1 transmits a file version notification response as "NG" to the OPS 2 (from step S404 to step S412), in order to notify the OPS 2 of the mismatching. Then, the file obtaining unit 15 transmits the request for obtaining a version of the file necessary for the operation control (step S413). For example, this request is performed in accordance with the well-known FTP (File Transfer Protocol). Then, when communication is currently being performed, the file updating process waits for elapse of a predetermined time (Time Wait) (from step S414 to step S15). Then, when communication is not currently being performed, the file updating process is performed (from step S414 to step S416).

The updated file is stored in the storage unit 12 along with the version information indicating the version of the file.

According to the third operation example described above, it is possible to update only an apparatus needing updating only when needed, by automatically confirming the file versions before the operation and by performing the file updating in the case where the major versions out of the file versions are different. Then, it is possible to further prevent the bandwidth of the network from being narrowed.

### (Operation Control Method)

In the femto base station apparatus and the OPS descried above, the following operation control method is implemented. That is, an operation control method is implemented by including: a first step for transmitting the version information of the file necessary for the operation control for a femto base station apparatus to the femto base station apparatus before performing the operation control; and a second step for transmitting the version of file necessary for the operation control to the femto base station apparatus, when the version information of the file necessary for the operation control does not match the version information stored in the femto base station apparatus.

According to the operation control method, it is possible to update only an apparatus needing updating only when needed, by automatically confirming the file versions before the operation control and by performing the file updating in the case where the file versions are different. Then, it is possible to prevent the bandwidth of the network from being narrowed.

### (Conclusion)

By using the femto base station described above, it is possible to update only an apparatus needing updating only when needed, by automatically confirming the file versions before the operation and by performing the file updating in the case where the file versions are different. Then, it is possible to prevent the bandwidth of the network from being narrowed. Furthermore, by performing the file updating before the operation in the case where the file versions are different, the file is surely updated to the latest version at the timing of performing the operation and the femto base station apparatus can be controlled with the latest version of file.

Furthermore, it is possible to update the file only for the femto base station apparatus desired to be controlled only by registering the file in advance, and so the operator does not have to perform the file updating with taking into account the network bandwidth. For example, this eliminates the need for an automatic file updating targeting at traffic off peak hours such as a nighttime period.

Furthermore, by incorporating the version information for confirming the file version into a signal for the operation control like the second operation example described above, it is possible to eliminate the exchanges of signals in confirming the file version. Accordingly, the network load can be further reduced.

In Non-Patent Document 2 described above, the updating can be performed at the timing selected by the user (for example, update once a day). However, the update timing may be different from the timing when the operation system needs to control, thereby resulting in creation of a period of time during when normal control is difficult. Furthermore, when there are a lot of users, a new problem occurs, the problem congesting a communication line or requiring the extension of the apparatus or the like, since a lot of signals are communicated between the femto base station apparatus and the operation system.

In contrast, according to the present embodiment, the firmware updating of the apparatus can be performed at a timing when the network side needs to control. Furthermore, the bandwidth of the network can be prevented from being narrowed due to the firmware updating, since it is possible to update only an apparatus needing updating only when needed.

Furthermore, in Patent Document 1 described above, the updating process is performed from network side at a constant timing, but the version information is not confirmed. In contrast, according to the present embodiment, it is possible to update only an apparatus needing updating only when needed, by confirming the file version information and by performing the file updating in the case where the file versions are different. Then, it is possible to prevent the bandwidth of the network from being narrowed.

### Industrial Applicability

The present invention can be applied in the case where the operation control is performed for the femto base station apparatus.

### Reference Signs List

- 1: femto base station apparatus
- 2: operation system (OPS)
- 3: mobile communication terminal apparatus
- 11: communication controller
- 12: storage unit
- 13: version information obtaining unit
- 14: version confirming unit
- 15: file obtaining unit
- 16: operation controller
- 21: communication controller
- 22: storage unit
- 23: operation controller
- 24: file version information transmitting unit
- 25: file transmitting unit

## Claims

1. A base station apparatus comprising:
a storage unit (12) configured to store an updateable file, being a software controlling the function of the base station or a firmware, necessary for operation control, being a reset control switching a power supply into OFF state once and into ON state again or an application updating of the base station apparatus, together with version information indicating a version of the file;
a version information obtaining unit (13) configured to obtain from the storage unit (12) the version information of the file necessary for the operation control before performing the operation control;
a communication controller (11) configured to receive notified file version information;
a version confirming unit (14) configured to confirm whether or not the version information obtained by the version information obtaining unit (13) matches the notified file version information; and
an operation controller (16) configured to perform the operation control when the version confirming unit (14) confirms matching of the version information,
**characterized in that**
the base station apparatus is a femto base station apparatus (1), wherein
the version information obtaining unit (13) is configured to obtain the version information including major version information and minor version information, the major version information being upgraded when an improvement of the operation control or an improvement of critical security is implemented, and the minor version information being upgraded in the case of a simple version upgrade not including an improvement of the operation control or an improvement of critical security, and wherein
the version confirming unit (14) is configured to confirm whether or not only the major version information obtained by the version information obtaining unit (13) matches the major version information of the notified file version information.

2. The base station apparatus according to claim 1, further comprising:
a file obtaining unit (15) configured to obtain an updated version of the file necessary for the operation control when the version confirming unit (14) confirms mismatching between the major version information of the file stored in the storage unit (12) and the notified file version information.

3. The base station apparatus according to claim 1 or 2, **characterized in that** the communication controller (11) is configured to receive the notified file version information in a notice of file version information transmitted to the base station apparatus before performing the operation control.

4. The base station apparatus according to claim 1 or 2, **characterized in that** the communication controller (11) is configured to receive the notified file version information being included in an operation control instruction for performing the operation control.

5. A system including the base station apparatus according to any one of claims 1 to 4 and an operation system (2), the operation system (2) comprising:
a file version information transmitting unit (24) configured to transmit the notified file version information to the base station apparatus before performing the operation control; and
an operation controller (23) configured to transmit an operation control instruction to the base station apparatus.

## Patentansprüche

1. Basisstationsvorrichtung, umfassend:
eine Speichereinheit (12), die konfiguriert ist, eine aktualisierbare Datei zu speichern, die eine Software ist, die die Funktion der Basisstation steuert, oder eine Firmware, notwendig zur Betriebssteuerung, die eine Reset-Steuerung ist, die eine Leistungsversorgung einmal in einen AUS-Zustand schaltet und wieder in einen EIN-Zustand schaltet, oder eine Anwendung, die die Basisstationsvorrichtung zusammen mit den Versionsinformationen, die eine Version der Datei angeben, aktualisiert;
eine Einheit (13) zum Einholen von Versionsinformationen, die konfiguriert ist, die Versionsinformationen der Datei, die für die Betriebssteuerung notwendig ist, vor dem Durchführen der Betriebssteuerung von der Speichereinheit (12) einzuholen;
eine Kommunikationssteuereinheit (11), die konfiguriert ist, bekanntgegebene Dateiversionsinformationen zu empfangen;
eine Versionsbestätigungseinheit (14), die konfiguriert ist, zu bestätigen, ob die durch die Einheit (13) zum Einholen von Versionsinformationen eingeholen Versionsinformationen mit den bekanntgegebenen Dateiversionsinformationen übereinstimmen oder nicht, und
eine Betriebssteuereinheit (16), die konfiguriert ist, die Betriebssteuerung durchzuführen, wenn die Versionsbestätigungseinheit (14) das Übereinstimmen der Versionsinformationen bestätigt,
**dadurch gekennzeichnet, dass**
die Basisstationsvorrichtung eine Femto-Basisstationsvorrichtung (1) ist, wobei
die Einheit (13) zum Einholen von Versionsinformationen konfiguriert ist, Hauptversionsinformationen und Nebenversionsinformationen einzuholen, wobei die Hauptversionsinformationen aktualisiert werden, wenn eine Verbesserung der Betriebssteuerung oder eine sicherheitsrelevante Verbesserung implementiert wird, und die Nebenversionsinformationen in dem Fall eines einfachen Versions-Upgrades, das nicht eine Verbesserung der Betriebssteuerung oder eine sicherheitsrelevante Verbesserung umfasst, aktualisiert werden, und wobei
die Versionsbestätigungseinheit (14) konfiguriert ist, zu bestätigen, ob nur die durch die Einheit (13) zum Einholen von Versionsinformationen eingeholten Hauptversionsinformationen mit den Hauptversionsinformationen der bekanntgegebenen Dateiversionsinformationen übereinstimmen.

2. Basisstationsvorrichtung nach Anspruch 1, umfassend:
eine Einheit (15) zum Erhalten einer Datei, die konfiguriert ist, eine aktualisierte Version der für die Betriebssteuerung notwendigen Datei zu erhalten, wenn die Versionsbestätigungseinheit (14) eine Nichtübereinstimmung zwischen den Hauptversionsinformationen der Datei, die in der Speichereinheit (12) gespeichert ist, und den bekanntgegebenen Dateiversionsinformationen bestätigt.

3. Basisstationsvorrichtung nach Anspruch 1 oder 2, **dadurch gekennzeichnet, dass** die Kommunikationssteuereinheit (11) konfiguriert ist, die bekanntgegebenen Dateiversionsinformationen in einer Mitteilung von Dateiversionsinformationen, die vor dem Durchführen der Betriebssteuerung an die Basisstationsvorrichtung gesendet werden, zu empfangen.

4. Basisstationsvorrichtung nach Anspruch 1 oder 2, **dadurch gekennzeichnet, dass** die Kommunikationssteuereinheit (11) konfiguriert ist, die bekanntgegebenen Dateiversionsinformationen zu empfangen, die in einer Betriebssteuerungsanweisung zum Durchführen der Betriebssteuerung enthalten sind.

5. System, das die Basisstationsvorrichtung nach einem der Ansprüche 1 bis 4 und ein System zum Betrieb (2) enthält, wobei das System zum Betrieb (2) umfasst:
eine Einheit (24) zum Senden von Dateiversionsinformationen, die konfiguriert ist, die bekanntgegebenen Dateiversionsinformationen vor dem Durchführen der Betriebssteuerung an die Basisstation zu senden, und
eine Betriebssteuereinheit (23), die konfiguriert ist, eine Betriebssteuerungsanweisung an die Basisstationsvorrichtung zu senden.

## Revendications

1. Appareil de station de base comprenant :
une unité de stockage (12) configurée pour stocker un fichier pouvant être mis à jour étant un logiciel commandant la fonction de la station de base ou un microprogramme nécessaire pour une commande de fonctionnement étant une commande de réinitialisation commutant une alimentation électrique une fois dans un état ARRÊT et de nouveau dans un état MARCHE ou une application de mise à jour de l'appareil de station de base conjointement avec des informations de version indiquant une version du fichier;
une unité d'obtention d'informations de version (13) configurée pour obtenir de l'unité de stockage (12) les informations de version du fichier nécessaire pour la commande de fonctionnement avant la réalisation de la commande de fonctionnement;
un contrôleur de communication (11) configuré pour recevoir des informations de version de fichier notifiées;
une unité de confirmation de version (14) configurée pour confirmer si les informations de version obtenues par l'unité d'obtention d'informations de version (13) correspondent ou non aux informations de version de fichier notifiées; et
un dispositif de commande de fonctionnement (16) configuré pour réaliser la commande de fonctionnement lorsque l'unité de confirmation de version (14) confirme la correspondance des informations de version, **caractérisé en ce que**
l'appareil de station de base est un appareil de femto station de base (1), dans lequel
l'unité d'obtention d'informations de version (13) est configurée pour obtenir les informations de version incluant des informations de version majeure et des informations de version mineure, les informations de version majeure étant actualisées lorsqu'une amélioration de la commande de fonctionnement ou une amélioration de la sécurité critique est mise en oeuvre et les informations de version mineure étant actualisées dans le cas d'une simple mise à niveau de version n'incluant pas une amélioration de la commande de fonctionnement ou une amélioration de la sécurité critique, et dans lequel
l'unité de confirmation de version (14) est configurée pour confirmer si uniquement les informations de version majeure obtenues par l'unité d'obtention d'informations de version (13) correspondent aux informations de version majeure des informations de version de fichier notifiées.

2. Appareil de station de base selon la revendication 1, comprenant en outre:
une unité d'obtention de fichier (15) configurée pour obtenir une version mise à jour du fichier nécessaire à la commande de fonctionnement lorsque l'unité de confirmation de version (14) confirme la non-correspondance entre les informations de version majeure du fichier stocké dans l'unité de stockage (12) et les informations de version de fichier notifiées.

3. Appareil de station de base selon la revendication 1 ou 2, **caractérisé en ce que** le contrôleur de communication (11) est configuré pour recevoir les informations de version de fichier notifiées dans une notice d'informations de version de fichier transmise à l'appareil de station de base avant la réalisation de la commande de fonctionnement.

4. Appareil de station de base selon la revendication 1 ou 2, **caractérisé en ce que** le contrôleur de communication (11) est configuré pour recevoir les informations de version de fichier notifiées étant incluses dans une instruction de commande de fonctionnement pour réaliser la commande de fonctionnement.

5. Système incluant l'appareil de station de base selon l'une quelconque des revendications 1 à 4 et un système de fonctionnement (2), le système de fonctionnement (2) comprenant:
une unité de transmission d'informations de version de fichier (24) configurée pour transmettre les informations de version de fichier notifiées à l'appareil de station de base avant la réalisation de la commande de fonctionnement; et
un dispositif de commande de fonctionnement (23) configuré pour transmettre une instruction de commande de fonctionnement à l'appareil de station de base.
